# EUROPEAN PATENT SPECIFICATION

(11) **EP 2 827 684 B1**
(45) Date of publication and mention of the grant of the patent: **22.08.2018**
(21) Application number: 13761464.0
(22) Date of filing: 20.02.2013
(51) Int. Cl.: H05B 37/02, F21L 4/00, F21V 23/00

(54) **LIGHTING APPARATUS, AND LIGHTING ADJUSTMENT METHOD**
BELEUCHTUNGSVORRICHTUNG UND BELEUCHTUNGSEINSTELLVERFAHREN
APPAREIL D'ÉCLAIRAGE, ET PROCÉDÉ D'AJUSTEMENT D'ÉCLAIRAGE

(30) Priority: 12.03.2012 JP 2012054796
(43) Date of publication of application: 21.01.2015
(73) Proprietor: Panasonic Intellectual Property Management Co., Ltd., Osaka-shi, Osaka 540-6207 (JP)
(72) Inventor: IWAMURA, Norihiro, Osaka 540-6207 (JP); TSURUTA, Naoki, Osaka 540-6207 (JP); IKEDA, Masaki, Osaka 540-6207 (JP)
(74) Representative: Appelt, Christian W.
(86) International application number: PCT/JP2013/000939
(87) International publication number: WO 2013/136671

(56) References cited:
- JP-A- H0 945 101
- JP-A- 2001 325 824
- JP-A- 2001 325 824
- JP-A- 2004 214 519
- JP-A- 2007 287 964
- US-A- 6 095 661
- US-A1- 2011 252 678
- US-A1- 2011 279 059
- US-B1- 7 015 654

## Description

The present invention relates to a lighting apparatus, which includes a constant voltage circuit that is applicable to battery packs supplying different voltages, and a method for adjusting lighting.

JP 2001 325824 A describes a voltage control constant current circuit that is connected to a LED, and a reference voltage control circuit is provided for continuously changing a reference voltage for generating a constant current in the voltage control constant-current circuit, corresponding to fluctuations in the battery voltage of the portable terminal. A current flowing in the LED is continuously changed, corresponding to the fluctuations of the battery voltage of the portable terminal, so that a bright light is emitted when the battery voltage is high and a dark light is emitted when the voltage is low, thus preventing consumption of the battery.

US 2011 252678 A1 describes a street sign method, system and apparatus that include at least one translucent sign face, a solar photovoltaic panel system for generating electrical energy from sunlight, a rechargeable battery system for storing the electrical energy during the day, at least one Light Emitting Diode (LED) powered by the electrical energy stored in the rechargeable battery system, and a control circuit powered by the rechargeable battery system and configured to operate the at least one LED to illuminate the at least one sign face. The control circuit is configured to calculate an amount of electrical power that can be supplied from the rechargeable battery system to the at least one LED so that said the at least one LED operates at a relatively constant level of LED light output brightness during substantially the entire night time hours based on solar energy supplied to the rechargeable battery system during the previous daytime hours. The street name sign is mountable to a post or pole.

In the prior art, patent document 1 describes a known lighting apparatus that employs a battery pack including a rechargeable secondary battery that serves as a power supply.

Additionally, patent document 2 describes a known lighting apparatus that includes a constant voltage circuit to maintain the voltage supplied to a light source at a constant value even when the voltage supplied from a power source is not constant.
Patent Document 1: Japanese Laid-Open Patent Publication No. 2008-29156
Patent Document 2: Japanese Laid-Open Patent Publication No. 2007-287964

In a lighting apparatus such as those described above, even when battery packs, each of which includes a rechargeable battery, supply different rated output voltages, for example, the use of a constant voltage circuit would allow a constant voltage to be obtained regardless of which one of the battery packs, which have different rated output voltages, is used. Thus, when the constant voltage circuit is arranged in the lighting apparatus, the light source of the lighting apparatus may emit light with a generally constant brightness even when the voltage supplied from the battery pack decreases.

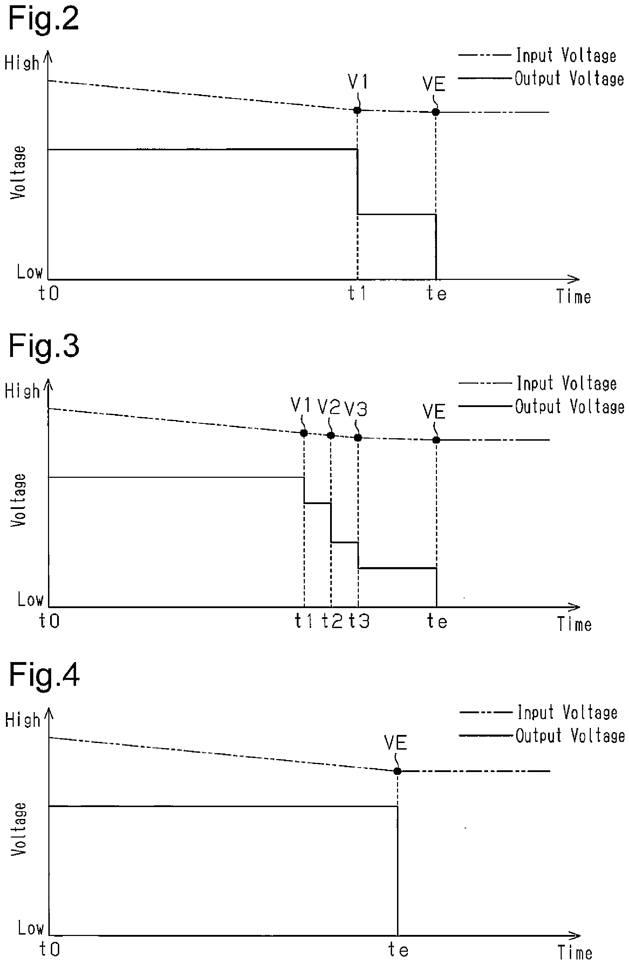

However, when the battery pack is depleted and, for example, as shown in Fig. 4, the input voltage from the battery pack is decreased to a deactivation voltage VE, the light of the light source is suddenly switched off. This may disable the use of the lighting apparatus when the lighting apparatus is in use.

To solve the above problem, it is an object of the present invention to provide a lighting apparatus including a constant voltage circuit and being capable of indicating the state of charge of a battery pack and a method for adjusting the lighting.

To solve the above problem, in the first aspect of the present invention, a lighting apparatus capable of using a battery pack of different rated voltages includes a light source, a constant voltage circuit that adjusts an output voltage based on an input voltage from the battery pack so that a constant output voltage is supplied to the light source, and a voltage measurement unit that measures the input voltage from the battery pack. The constant voltage circuit includes a luminance modulation unit that adjusts the output voltage to start dimming the light source when the measured input voltage decreases to a dimming initiation voltage or lower.

In the above configuration, preferably, when the measured voltage decreases to lower than or equal to a deactivation voltage, which is lower than the dimming initiation voltage, the luminance modulation unit deactivates the light source.

In the above configuration, preferably, when the measured voltage decreases to the dimming initiation voltage or lower, the luminance modulation unit dims the light source in a stepped manner as the measured voltage decreases.

In the second aspect of the present invention, a method for adjusting an output voltage supplied to a light source in a lighting apparatus capable of using a battery pack of different rated voltages includes adjusting the output voltage based on an input voltage from the battery pack so that a constant output voltage is supplied to the light source, measuring the input voltage supplied from the battery pack, and adjusting the output voltage to start dimming the light source when the measured input voltage decreases to lower than or equal to a dimming initiation voltage.

The present invention provides a lighting apparatus including a constant voltage circuit and capable of indicating the state of charge of a battery pack and a method for adjusting the lighting.
Fig. 1 is a schematic diagram showing a lighting apparatus according to one embodiment of the present invention.
Fig. 2 is a timing chart showing a control method of a light source for the lighting apparatus according to the embodiment of the present invention.
Fig. 3 is a timing chart showing a control method of a light source for a lighting apparatus according to another embodiment of the present invention.
Fig. 4 is a timing chart showing a control method of a light source for a lighting apparatus in the prior art.

A lighting apparatus of one embodiment of the present invention will now be described with reference to the drawings.

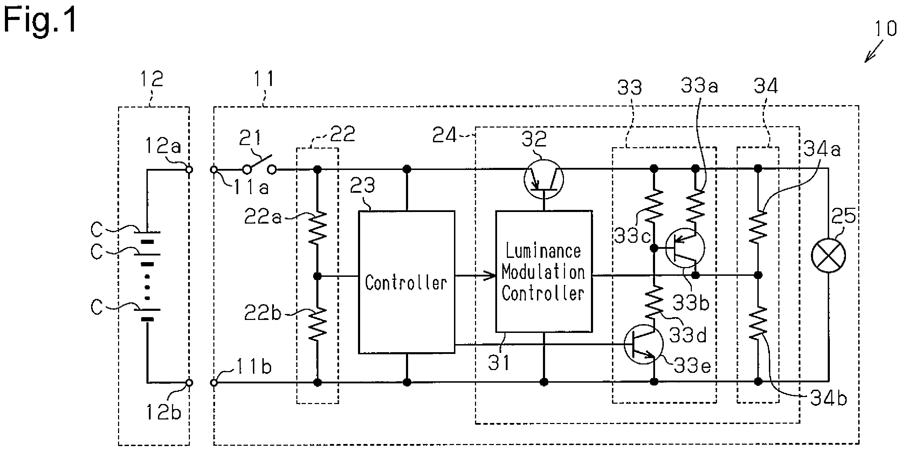

As shown in Fig. 1, a lighting apparatus 10 includes an apparatus main body 11, which includes a light source 25, and a battery pack 12, which is attached to the apparatus main body 11 in a removable manner. The battery pack 12 includes power terminals 12a and 12b that respectively correspond to power terminals 11a and 11b of the apparatus main body 11. When the battery pack 12 is attached to the apparatus main body 11, the terminals 11a and 11b of the apparatus main body 11 are electrically connected to the terminals 12a and 12b of the battery pack 12, respectively. This allows power to be supplied to the apparatus main body 11 from the battery pack. The battery pack 12 includes a plurality of cells C that are connected in series. In the embodiment, the cells C are each formed by a lithium ion battery, and each cell C is configured to have a voltage of 3.6 V.

As shown in Fig. 1, the apparatus main body 11 includes a housing, which is not shown in the drawings, accommodating a manual switch 21, an input voltage detector 22, a controller 23, a constant voltage circuit 24, and the light source 25.

The manual switch 21, which starts and stops the supply of power from the battery pack 12, is exposed to the exterior from the housing so that a user may, at least, operate the manual switch 21.

The input voltage detector 22, which is connected between the terminals 12a and 12b of the battery pack 12, is a resistor voltage dividing circuit that includes two resistors 22a and 22b connected in series. A node between the resistors 22a and 22b is electrically connected to an input of the controller 23. This allows the controller 23 to identify the type (difference in the number of the cells C) of the attached battery pack 12 from the divided voltage at the node between the resistors 22a and 22b. In the embodiment, a voltage measurement unit is formed by the input voltage detector 22 and the controller 23.

The constant voltage circuit 24 is configured to supply a predetermined voltage to the light source 25 even when the rated output voltage of the battery pack 12 is not constant. The constant voltage circuit 24 includes a luminance modulation controller 31, which is electrically connected to the controller 23, an output voltage adjuster 32, which undergoes pulse width modulation (PWM) control executed by the luminance modulation controller 31, an output voltage switch unit 33, and an output voltage detector 34.

The output voltage adjuster 32 is formed by a switching element and switched on and off based on a signal output from the luminance modulation controller 31.

The output voltage detector 34 is a resistor voltage dividing circuit that includes two resistors 34a and 34b connected in series. The luminance modulation controller 31 is connected to a node between the resistors 34a and 34b. Thus, the luminance modulation controller 31 controls activation and deactivation of the switching element, which serves as the output voltage adjuster 32, based on the divided voltage at the node between the resistors 34a and 34b.

The output voltage switch unit 33 and the luminance modulation controller 31 function as a luminance modulator that switches (adjusts) the voltage applied to the output voltage detector 34 and the light source 25 to adjust the luminance of the light source 25. The output voltage switch unit 33 includes a resistor 33a and a switching element 33b, which are connected in parallel to the resistor 34a, which is one of the resistors of the output voltage detector 34. The output voltage switch unit 33 also includes two resistors 33c and 33d and a switching element 33e, which are connected in parallel to the resistor 33a and the switching element 33b.

An example of the operation (effect) of the lighting apparatus 10 configured in the above manner will now be described with reference to Figs. 1 and 2.

When the manual switch 21, which is shown in Fig. 1, is operated by the user, power is supplied to the apparatus main body 11 from the battery pack 12. When the power is supplied, the controller 23 is activated. The controller 23 provides the luminance modulation controller 31 with a control initiation signal S1 or a termination signal S2 in accordance with an input voltage that the input voltage detector 22 is capable of receiving from the battery pack 12. More specifically, when the input voltage supplied from the battery pack 12 is higher than a deactivation voltage VE (refer to Fig. 2), the controller 23 outputs the control initiation signal S1. When the input voltage supplied from the battery pack 12 is lower than or equal to the deactivation voltage VE, the controller 23 outputs the termination signal S2. In this case, the deactivation voltage VE is set in advance in accordance with the specification or the like to prevent overdischarging of the battery pack 12.

When the control initiation signal S1 is provided to the luminance modulation controller 31, the luminance modulation controller 31 controls the timing for switching on and off the output voltage adjuster 32 in accordance with the voltage applied to the output voltage detector 34 (≈ the voltage applied to the light source 25), namely, PWM control.

In this case, for example, when the input voltage supplied from the battery pack 12 is higher than a dimming initiation voltage V1 (interval between t0 and t1 in Fig. 2), the controller 23 switches off the switching element 33e so that voltage is not applied to the resistors 33c and 33d. This switches off the switching element 33b that is connected between the resistors 33c and 33d. Therefore, the voltage applied to the light source 25 is equal to the voltage applied to the output voltage detector 34. The luminance modulation controller 31 performs PWM control on the output voltage adjuster 32 so that the voltage applied to the light source 25 remains generally constant until the input voltage supplied from the battery pack 12 is decreased to the dimming initiation voltage V1.

In time t1, during which the lighting apparatus 10 is used, when the input voltage supplied from the battery pack 12 decreases to the dimming initiation voltage V1, the controller 23 switches on the switching element 33e of the output voltage switch unit 33. This applies voltage to the resistors 33c and 33d and switches on the switching element 33b. Further, the resistor 33a of the output voltage switch unit 33 is connected in parallel to the resistor 34a of the output voltage detector 34. A combination resistor of the resistors 33a and 34a forms a portion of the voltage divider. This changes a voltage division ratio, which is used as the voltage that is applied to the side of the output voltage switch unit 33 monitored by the luminance modulation controller 31, and the output voltage applied to the light source 25. Under this situation, when the output voltage applied to the light source 25 is set to a voltage that is generally one half of the output voltage applied during the period between t0 and t1, the light source 25 emits dimmer light than that emitted by the light source 25 during the period between t0 and t1.

Then, at time te, when the input voltage of the battery pack 12 decreases to the deactivation voltage VE, the controller 23 provides the luminance modulation controller 31 with the termination signal S2. The luminance modulation controller 31 switches off the output voltage adjuster 32 to stop the application of voltage (power supply) to the light source 25.

The advantages of the lighting apparatus of the embodiment will now be described.
(1) The input voltage detector 22 and the controller 23 measure the input voltage supplied from the battery pack 12. When the measured voltage decreases to the dimming initiation voltage V1 or lower, the controller 23, the luminance modulation controller 31, and the output voltage switch unit 33 adjust the output voltage supplied to the light source 25 to start dimming the light source 25. In this manner, the lighting apparatus 10 including the constant voltage circuit 24 may indicate that the state of charge of the battery pack 12 has decreased by dimming the light source 25.
(2) When the voltage measured by the input voltage detector 22 and the controller 23 decreases to lower than or equal to the deactivation voltage VE, which is lower than the dimming initiation voltage V1, the light of the light source 25 is switched off. This configuration may prevent overdischarging of the battery pack 12 by switching off the light of the light source 25 before the battery pack 12 is over-discharged.

The embodiment of the present invention may be modified as follows.

In the above embodiment, the voltage of each cell C is set at 3.6 V. However, there is no limit to such a voltage.

In the above embodiment, when the input voltage from the battery pack 12 is higher than the dimming initiation voltage V1, the voltage applied to the light source 25 is represented by 100%. In this case, when the input voltage from the battery pack 12 is lower than or equal to the dimming initiation voltage V1, the voltage applied to the light source 25 is 50%. However, there is no limit to such a percentage. When the input voltage from the battery pack 12 is lower than or equal to the dimming initiation voltage V1, the voltage applied to the light source 25 may be varied as long as the applied voltage is lower than the voltage applied to the light source 25 when the input voltage is higher than the dimming initiation voltage V1.

Further, the above embodiment is configured to dim the light in a single step. However, for example, as shown in Fig. 3, a plurality of thresholds may be provided between the dimming initiation voltage V1 and the deactivation voltage VE (two thresholds V2 and V3 in Fig. 3), and the output voltage (the voltage applied to the light source 25) may be adjusted in a stepped manner in accordance with the comparison of the threshold and the input voltage. In this case, for example, a number of output voltage switch units 33 corresponding to the number of the thresholds may be arranged. Alternatively, a configuration using a D/A converter may be employed.

## Claims

1. A lighting apparatus (10) for use with a battery pack (12) of different rated voltages, the lighting apparatus comprising:
a light source (25);
a constant voltage circuit (24) that is configured to adjust an output voltage based on an input voltage from the battery pack so that a constant output voltage is supplied to the light source; and
a voltage measurement unit (22, 23) that is configured to measure the input voltage from the battery pack,
wherein the constant voltage circuit (24) includes a luminance modulation unit (31) that is configured to:
adjust the output voltage so that a constant output voltage is supplied to the light source (25) until the measured input voltage decreases to a dimming initiation voltage (V1);
adjust the output voltage to start dimming the light source (25) when the measured input voltage decreases to the dimming initiation voltage (V1) or lower; and
deactivate the light source (25) when the measured input voltage decreases to lower than or equal to a deactivation voltage (VE), which is lower than the dimming initiation voltage (V1), **characterised in that** a plurality of thresholds are provided between the dimming initiation voltage (V1) and the deactivation voltage (VE), and wherein when the measured input voltage decreases to the dimming initiation voltage (V1) or lower, the luminance modulation unit (31) is configured to dim the light source (25) in a stepped manner in accordance with a comparison of the plurality of thresholds and the measured input voltage as the measured input voltage decreases.

2. A method for adjusting an output voltage supplied to a light source (25) in a lighting apparatus (10) for use with a battery pack (12) of different rated voltages, the method comprising:
measuring an input voltage supplied from the battery pack (12);
adjusting the output voltage based on the input voltage from the battery pack (12) so that a constant output voltage is supplied to the light source (25) until the measured input voltage decreases to a dimming initiation voltage (V1);
adjusting the output voltage to start dimming the light source (25) when the measured input voltage decreases to lower than or equal to the dimming initiation voltage (V1); and
deactivating the light source (25) when the measured voltage decreases to lower than or equal to a deactivation voltage (VE), which is lower than the dimming initiation voltage (V1), wherein a plurality of thresholds are provided between the dimming initiation voltage (V1) and the deactivation voltage (VE), and **characterised in that** the adjusting the output voltage to start dimming the light source (25) includes dimming the light source (25) in a stepped manner in accordance with a comparison of the plurality of thresholds and the measured input voltage as the measured input voltage decreases when the measured input voltage decreases to the dimming initiation voltage (V1) or lower.

## Patentansprüche

1. Beleuchtungsvorrichtung (10) zur Verwendung mit einem Batteriepack (12) unterschiedlicher Nennspannungen, wobei die Beleuchtungsvorrichtung umfasst:
eine Lichtquelle (25);
eine Konstantspannungsschaltung (24), die dafür ausgelegt ist, eine Ausgangsspannung basierend auf einer Eingangsspannung von dem Batteriepack so anzupassen, dass der Lichtquelle eine konstante Ausgangsspannung zugeführt wird; und
eine Spannungsmesseinheit (22, 23), die dafür ausgelegt ist, die Eingangsspannung von dem Batteriepack zu messen,
wobei die Konstantspannungsschaltung (24) eine Leuchtdichtenmodulationseinheit (31) beinhaltet, die dafür ausgelegt ist:
die Ausgangsspannung so anzupassen, dass der Lichtquelle (25) eine konstante Ausgangsspannung solange zugeführt wird, bis die gemessene Eingangsspannung auf eine Dimmungsinitiierungsspannung (V1) sinkt;
die Ausgangsspannung anzupassen, um die Dimmung der Lichtquelle (25) zu beginnen, wenn die gemessene Eingangsspannung auf die Dimmungsinitiierungsspannung (V1) oder weniger sinkt; und
die Lichtquelle (25) zu deaktivieren, wenn die gemessene Eingangsspannung auf weniger als oder gleich eine Deaktivierungsspannung (VE) sinkt, welche geringer als die Dimmungsinitiierungsspannung (V1) ist,
**dadurch gekennzeichnet, dass**
mehrere Schwellenwerte zwischen der Dimmungsinitiierungsspannung (V1) und der Deaktivierungsspannung (VE) bereitgestellt sind, und wobei, wenn die gemessene Eingangsspannung auf die Dimmungsinitiierungsspannung (V1) oder weniger sinkt, die Leuchtdichtenmodulationseinheit (31) dafür ausgelegt ist, die Lichtquelle (25) gemäß einem Vergleich der mehreren Schwellenwerte und der gemessenen Eingangsspannung, stufenweise zu dimmen, wenn die gemessene Eingangsspannung sinkt.

2. Verfahren zur Anpassung einer Ausgangsspannung, die einer Lichtquelle (25) in einer Beleuchtungsvorrichtung (10) zur Verwendung mit einem Batteriepack (12) unterschiedlicher Nennspannungen zugeführt wird, wobei das Verfahren umfasst:
Messen einer Eingangsspannung, die aus dem Batteriepack (12) zugeführt wird;
Anpassen der Ausgangsspannung basierend auf der Eingangsspannung aus dem Batteriepack (12) so, dass der Lichtquelle (25) eine konstante Ausgangsspannung solange zugeführt wird, bis die gemessene Eingangsspannung auf eine Dimmungsinitiierungsspannung (V1) sinkt;
Anpassen der Ausgangsspannung, um die Dimmung der Lichtquelle (25) zu beginnen, wenn die gemessene Eingangsspannung auf weniger als oder gleich die Dimmungsinitiierungsspannung (V1) sinkt; und
Deaktivieren der Lichtquelle (25), wenn die gemessene Spannung auf weniger als oder gleich eine Deaktivierungsspannung (VE) sinkt, welche geringer als die Dimmungsinitiierungsspannung (V1) ist, wobei mehrere Schwellenwerte zwischen der Dimmungsinitiierungsspannung (V1) und der Deaktivierungsspannung (VE) bereitgestellt sind, und **dadurch gekennzeichnet, dass** das Anpassen der Ausgangsspannung, um die Dimmung der Lichtquelle (25) zu beginnen, ein stufenweises Dimmen der Lichtquelle (25) gemäß einem Vergleich der mehreren Schwellenwerte und der gemessenen Eingangsspannung, wenn die gemessene Eingangsspannung auf die Dimmungsinitiierungsspannung (V1) oder weniger sinkt, beinhaltet.

## Revendications

1. Appareil d'éclairage (10) destiné à être utilisé avec un ensemble de batteries (12) de différentes tensions nominales, cet appareil d'éclairage comprenant :
une source de lumière (25) ;
un circuit à tension constante (24) qui est conçu pour ajuster une tension de sortie sur la base d'une tension d'entrée provenant de l'ensemble de batteries de façon à ce qu'une tension de sortie constante soit appliquée à la source de lumière ; et
une unité de mesure de tension (22, 23) qui est conçue pour mesurer la tension d'entrée provenant de l'ensemble de batteries,
le circuit à tension constante (24) comprenant une unité de modulation de la luminance (31) qui est conçue pour :
ajuster la tension de sortie de façon à ce qu'une tension de sortie constante soit appliquée à la source de lumière (25) jusqu'à ce que la tension d'entrée mesuré diminue jusqu'à une tension de début de gradation (V1) ;
ajuster la tension de sortie pour démarrer la gradation de la source de lumière (25) lorsque la tension d'entrée mesurée diminue jusqu'à la tension de début de gradation (V1) ou moins ; et
désactiver la source de lumière (25) lorsque la tension d'entrée mesurée diminue jusqu'à une valeur inférieure ou égale à une tension de désactivation (VE), qui est inférieure à la tension de début de gradation (V1), **caractérisé en ce qu'**une pluralité de seuils sont prévus entre la tension de début de gradation (V1) et la tension de désactivation (VE) et dans lequel, lorsque la tension d'entrée mesurée diminue jusqu'à la tension de début de gradation (V1) ou moins, l'unité de modulation de luminance (31) étant conçue pour régler la source de lumière (25) par étapes sur la base d'une comparaison de la pluralité de seuils et de la tension d'entrée mesurée lorsque la tension d'entrée mesurée diminue.

2. Procédé pour l'ajustement d'une tension de sortie appliquée à une source de lumière (25) dans un appareil d'éclairage (10) destiné à être utilisé avec un ensemble de batteries (12) de différentes tensions nominales, ce procédé comprenant :
la mesure d'une tension d'entrée appliquée par l'ensemble de batteries (12) ;
l'ajustement de la tension de sortie sur la base de la tension d'entrée provenant de l'ensemble de batteries (12) de façon à ce qu'une tension de sortie constante soit appliquée à la source de lumière (25) jusqu'à ce que la tension d'entrée mesurée diminue jusqu'à une tension de début de gradation (V1) ;
l'ajustement de la tension de sortie pour démarrer le réglage de la source de lumière (25) lorsque la tension d'entrée mesurée diminue jusqu'à une valeur inférieure ou égale à la tension de début de gradation (V1) ; et
la désactivation de la source de lumière (25) lorsque la tension mesurée diminue jusqu'à une valeur inférieure ou égale à une tension de désactivation (VE) qui est inférieure à la tension de début de gradation (V1), une pluralité de seuils étant prévus entre la tension de début de gradation (V1) et la tension de désactivation (VE) et **caractérisé en ce que** l'ajustement de la tension de sortie pour démarrer la gradation de la source de lumière (25) comprend la gradation de la source de lumière (25) par étapes sur la base d'une comparaison de la pluralité de seuils et de la tension d'entrée mesurée lorsque la tension d'entrée mesurée diminue lorsque la tension d'entrée mesurée diminue jusqu'à la tension de début de gradation (V1) ou moins.
